(19) Europäisches Patentamt
European Patent Office
Office européen des brevets

(11) **EP 1 647 841 A1**

(12) **EUROPÄISCHE PATENTANMELDUNG**

(43) Veröffentlichungstag:
**19.04.2006 Patentblatt 2006/16**

(51) Int Cl.:
*G02B 1/00* (2006.01)   *C03C 17/28* (2006.01)
*C03C 17/34* (2006.01)

(21) Anmeldenummer: **04105252.3**

(22) Anmeldetag: **22.10.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **13.10.2004 DE 102004049954**

(71) Anmelder: **Schott AG**
**55122 Mainz (DE)**

(72) Erfinder:
• **Schnell, Rupert**
**67551, Worms (DE)**

• **Pawlowski, Edgar**
**55271, Stadecken-Elsheim (DE)**
• **Beier, Wolfram**
**55270, Essenheim (DE)**

(74) Vertreter: **KEIL & SCHAAFHAUSEN**
**Patentanwälte**
**Cronstettenstrasse 66**
**60322 Frankfurt am Main (DE)**

Bemerkungen:
Geänderte Patentansprüche gemäss Regel 86 (2) EPÜ.

(54) **Komposit zur Strahlformung umfassend ein anorganisches Substrat und eine Komponente aus organischem Polymer**

(57) Die vorliegende Erfindung betrifft strahlformende Elemente, wie beispielsweise Linsen, diffraktive Elemente oder Spiegel, die als Komposite vorliegen, umfassend ein anorganisches Substrat (7) und ein organisches Substrat (6) in der Form eines Polymers, welches bei Temperaturen zwischen 0 und 180˚C thermisch aushärtbar ist. Vorzugsweise ist das organische Polymer ausgewählt aus der Gruppe bestehend aus Polyurethanen und Silikonen. Nach einer bevorzugten Ausführungsform handelt es sich um ein Polyurethan.

Die strahlformenden Elemente gemäß der vorliegenden Erfindung weisen vorteilhafte Eigenschaften, betreffend Präzision, Steifigkeit und Beständigkeit, auf und sind ferner mittels eines wirtschaftlichen Verfahrens einfach herzustellen, welches Verfahren auch Gegenstand der Erfindung ist.

Fig. 1

EP 1 647 841 A1

**Beschreibung**

Die vorliegende Erfindung betrifft strahlformende Elemente, wie beispielsweise Linsen, diffraktive Elemente oder Spiegel, die als Komposite vorliegen, umfassend ein anorganisches Substrat und eine Komponente mit organischem Anteil, weiterhin organische Komponente genannt, in der Form eines Polymers. Das Polymer wird durch einen thermisch initiierten Prozess aus zwei oder mehreren Ausgangskomponenten in dem beschriebenen Herstellungsprozess gebildet. Die thermische Initiierung erfolgt bei Temperaturen zwischen 0 und 180 ˚C. Vorzugsweise ist das organische Polymer ausgewählt aus der Gruppe bestehend aus Polyurethanen und Silikonen. Nach einer bevorzugten Ausführungsform handelt es sich bei dem Polymer um ein Polyurethan.

Die strahlformenden Elemente gemäß der vorliegenden Erfindung weisen vorteilhafte Eigenschaften, betreffend Präzision, Steifigkeit und Beständigkeit, auf und sind ferner mittels eines wirtschaftlichen Verfahrens einfach herzustellen, welches Verfahren auch Gegenstand der Erfindung ist.

Aus dem Stand der Technik sind verschiedene Kompositmaterialien, die als eine anorganische Komponente Glas umfassen, bekannt.

In der US 4,690,512 wird eine Komposit-Linse beschrieben, die entweder aus Glas kombiniert mit Plastik oder aus zwei Plastikteilen besteht, wobei die Elemente mittels eines optischen Kitts miteinander verbunden sind. Die Kittverbindung zwischen dem Element aus dem Kunststoff soll durch eine Lage eines aliphatischen Polyurethans verbessert werden. US 5,323,191 beschreibt "Glas-Plastik-Linsen", wobei eine dünne Glasschicht an eine dickere und transparente organische Komponente gebunden ist. Die Verbindung wird erreicht durch eine Klebstoffschicht auf Basis von Polyurethan mit besonderen Eigenschaften. Die EP 182 503 betrifft eine optische Verbundkörperlinse, wobei ein optisch klares, kohäsives und adhäsives elastomeres Bindematerial den Teil der Linse, der aus vorzugsweise photochromem Glas besteht, mit dem Kunststoffteil der Linse verbindet.

Aus dem Stand der Technik wird erkennbar, dass die Verwendung verschiedener Materialien, insbesondere anorganischer und organischer Materialien, zur Herstellung von strahlformenden Elementen, insbesondere Linsen, nur mittels komplizierter Klebetechniken zu verwirklichen ist. Es besteht daher ein Bedarf, strahlformende Elemente, welche ein anorganisches Substrat einerseits und eine organische Komponente andererseits umfassen, bereitzustellen, wobei das strahlformende Element lediglich diese beiden Komponenten umfasst und keine zusätzliche Schicht einer als Klebe- oder Bindemittel wirkenden Substanz aufweist. Ein solches Element sollte zudem einfach und wirtschaftlich herstellbar sein.

Überraschenderweise wurde gefunden, dass sich ein anorganisches Substrat, wie beispielsweise Glas, Quarzglas, Silizium, Metall oder ein Mineral, beschichtet mit einem Polymer, wie einem Polyurethan oder einem Silikon, hervorragend als strahlformendes Element eignet und dabei hervorragende Eigenschaften aufweist, wie hohe Präzision, gute Steifigkeit und Beständigkeit. Bevorzugt zu verwendende Polyurethane sind aliphatische Polyurethane, bevorzugt zu verwendende Silikone sind additionsvernetzende Systeme. Ein besonders bevorzugtes Polyurethan ist das "PUR Glasklar System" der Firma Rühl Puromer GmbH oder Elastoclear der Firma Elastogran. Beide Materialien zeichnen sich durch den Einsatz von aliphatischen Isocyanaten für die Iso-Komponente aus.

Das strahlformende Element gemäß der vorliegenden Erfindung kann entweder durchleuchtet werden, also beispielsweise die Form einer Linse aufweisen, aber auch zum Reflektieren von Licht eingesetzt werden, beispielsweise in Form eines Spiegels. Sofern das strahlformende Element gemäß der vorliegenden Erfindung beispielsweise als Linse lichtdurchlässig gestaltet ist, sind folglich alle gewählten Materialien transparent.

Ferner betrifft die vorliegende Erfindung ein kostengünstiges und einfaches Verfahren zur Herstellung eines strahlformenden Elements mit überlegenen Eigenschaften.

Zur Herstellung des strahlformenden Elements gemäß der vorliegenden Erfindung wird beispielsweise eine Glasplatte in eine Form eingebracht und fixiert. Für eine Polyurethanbeschichtung werden die Diol- und Isocyanat-Komponenten des Polyurethans in einer geeigneten Apparatur dosiert, gemischt und mit in die Form gegeben. Eine beispielhafte, geeignete Apparatur ist eine Hochdruckdosiermaschine für die Polyurethanverarbeitung. Vorteilhaft ist die Evakuierung aller Komponenten vor ihrer Verwendung. Somit werden Gaseinschlüsse oder Einschlüsse leicht flüchtige Kontaminationen entfernt und es kann die Blasenbildung im Produkt entsprechend verringert bzw. ausgeschlossen werden. Vorzugsweise werden für die Polyurethanherstellung alle Komponenten für die Formfüllung mit einem Druck von 0 bis 100.000 hPa, weiter bevorzugt mit einem Druck von 1.000 bis 50.000 hPa beaufschlagt. So kann die Oberflächen- und Strukturqualität verbessert und eine Blasenbildung verhindert werden.

Für die Herstellung eines Komposites mit Silikon als organischer Komponente muss wegen der längeren Topfzeit die Mischung der Komponenten nicht unmittelbar mit einem Mischkopf nahe des Formwerkzeuges geschehen.

Zur Erreichung einer gezielten Strahlformung, ist während des Produktionsprozesses eine Strukturierung der Oberfläche einzubringen. Dies geschieht bevorzugt durch eine strukturierte Fläche der Form, welche mit der organischen Komponente, wie dem Polyurethan, in Kontakt kommt. Die strukturierte Fläche kann aus Metall, Glas, Quarzglas, Silizium, oder Polymeren bestehen. Besonders geeignet sind Materialien wie Silikone, beispielsweise RTF-Silicone, oder fluorhaltige Polymere mit einer geringen Oberflächenenergie, so dass auf Trennmittel ganz oder teilweise verzichtet werden kann.

Zum Beschleunigen der chemischen Reaktion können die Komponenten und die Form vorzugsweise erwärmt werden, zum Beispiel auf Temperaturen in einem Bereich von etwa 0˚C bis 180˚C, vorzugsweise 0 bis 150 ˚C und weiter bevorzugt von 0 bis 100 ˚C. Ein beispielsweise für den Einsatz von Polyurethanen geeigneter Temperaturbereich ist von 4˚C bis 100˚C, nach einer besonders bevorzugten Ausführungsform bei 80 ˚C. Der Fachmann wird je nach organischer Komponente eine geeignete Temperatur wählen. Der Einsatz von UV-Licht zum Aushärten der organischen Phase ist nicht notwendig und auch nicht erwünscht, was ein Vorteil der vorliegenden Erfindung gegenüber dem Stand der Technik ist, denn so kann der technologische Aufwand reduziert werden. Wenn auf einen Aushärtungsschritt mittels UV-Licht verzichtet werden kann, hat dies ferner den Vorteil, dass auch nicht transparente Materialien eingesetzt werden können.

Das erfindungsgemäße Verfahren ermöglicht, die Dicke der beiden Komponenten frei zu wählen, was die Herstellung von beliebig geformten, strahlgebenden Elementen erlaubt.

Durch den Einsatz eines anorganischen Substrates, wie Gläser, Halbleiter oder Kristalle, wie beispielsweise Quarz oder $CaF_2$, weist das optische Element eine geringere thermische Ausdehnung, höhere Steifigkeit und Temperaturbeständigkeit im Vergleich zu rein organischen optischen Elementen auf. Dies erlaubt den Einsatz auch bei wechselnden Temperaturen und Umgebungseinflüssen.

Geeignete Gläser sind beispielsweise Kieselgläser (Quarzgläser), hier können diverse Typen brauchbar sein, die sich stark im OH-, Halogen- oder Kationengehalt unterscheiden; dotierte Quarzgläser, z.B. im Hinblick auf Nullausdehnung mit $TiO_2$ wie das ULE-Glas (ultra low expansion) von der Firma Corning, im Hinblick auf gezielte Brechzahlveränderung auch mit $GeO_2$ oder Fluor usw.; Natronkalksilicatgläser; Erdalkalialuminosilicatgläser (alkalifreie und alkalioxidhaltige); Borosilicatgläser; Phosphatgläser; Fluorphosphatgläser; Borophosphatgläser; Borophosphosilicatgläser; Lotgläser und Gläser mit niedrigem Tg; optische Gläser, sowohl bleihaltige (wie z.B. SF6 von Schott) als auch bleifreie (wie z.B. BK7 von Schott); Farb- und Filtergläser, ionengefärbt; Farb- und Filtergläser, gefärbt durch Ausscheidung einer Nano-Zweitphase (Anlaufgläser mit kolloidaler Zweitphase aus Metallen oder Halbleitern); Lasergläser; seltenerdenhaltige und andere "aktive" Gläser auf Silicat- oder anderer Basis (z.B. hochantimonoxidhaltige Gläser); Faradaygläser; Fluoridgläser und andere Halogenidgläser; Chalkogenidgläser, z.B. solche aus Systemen wie Se-As-Ge; Sulfidgläser, Telluridgläser usw.

Geeignete Glaskeramiken sind beispielsweise:

Lithiumaluminosilicatsysteme (LAS); Magnesiumaluminosilicatsysteme (MAS); maschinenbearbeitbare Glaskeramiken wie MACOR der Firma Corning; Sinterglaskeramiken, insbesondere über Sinterrouten hergestellte optisch transparente Nanoglaskeramiken; über organische oder anorganische Sol-Gel-Prozesse hergestellte Glaskeramiken, insbesondere so hergestellte optisch transparente Nanoglaskeramiken.

Wahlweise ist es möglich, durch Zugabe von geeigneten Substanzen die optische Funktionalität zu erhöhen. So können beispielsweise UV-Absorber für den UV-Schutz in beide Komponenten gegeben werden. Es können Nanopartikel, wie beispielsweise $TiO_2$, $Al_2O_3$, $Fe_2O_3$, $CeO_2$, ZnO, $ZrO_2$, $SiO_2$, $In_2O_3$, $SnO_2$, NiO, Fe, Al, Au, Ag, Ni, zur Erhöhung der Brechzahl, Veränderung der Dispersion oder dem Erzielen anderer Eigenschaften zugegeben werden. Es können wahlweise auch Teilchen, die vorzugsweise eine Teilchengröße von größer als 10 nm aufweisen und eine Brechzahl haben, die sich von der der organischen Komponente unterscheidet, zum Erzielen eines Streueffektes (als so genannter Diffusor) zugegeben werden. Hier sind insbesondere Teilchen geeignet, die eine von Polyurethan verschiedene Brechzahl aufweisen. Solche Teilchen können beispielsweise Glaspulver oder Polymere sein.

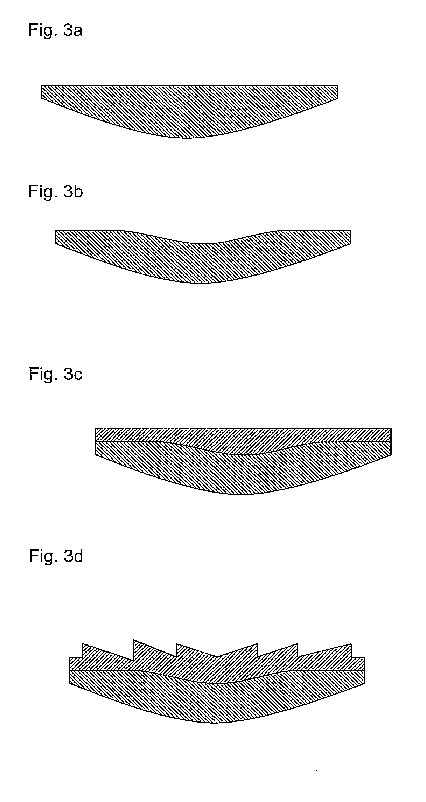

Das erfindungsgemäße Verfahren kann eingesetzt werden für die Korrektur von Formabweichungen an heiß geprägten Glasbauteilen, wie beispielsweise Linsen, besonders Bauteilen mit hohen Dickenunterschieden, wie beispielsweise DE-Linsen (dreifach ellipsoid) für Automobil-Frontscheinwerfer. Figur 3a zeigt ein heiß geprägtes Bauteil, zunächst in der Sollkontur. Diese Kontur kann sich nach dem Heißprägeprozess ungewünscht verändern (Figur 3b), welche mittels des erfindungsgemäßen Aufbaus durch das Aufbringen des Polymers wieder kompensiert werden kann (Figur 3c). Figur 3d zeigt dann eine Ausführungsform der Erfindung, nach welcher mittels des Polymers nicht nur die Kompensation der "Fehlstelle" erreicht werden kann, sondern das organische Polymer der Linse eine strukturierte Oberfläche verleiht.

Typische Formabweichungen des Glaskörpers in diesem Prozess sind insbesondere Einfallstellen, die beim Heißprägen von DE-Linsen durch Schrumpfen des Glases während des Abkühlprozesses entstehen. Der Einsatz des Polymers zu Korrekturzwecken ist besonders vorteilhaft, wenn der Unterschied von Brechzahl und Dispersion von Glas und Polymer durch die Materialauswahl gering gehalten wird. Somit können neben systematischen Prozessfehlern auch Schwankungen während des Produktionsverfahrens kompensiert werden, was ermöglicht, den Prozess kostengünstiger zu gestalten.

Die erfindungsgemäßen optischen Elemente können auch im Verbund miteinander eingesetzt werden und/oder einen mehrschichtigen Aufbau aufweisen. Der Komposit kann also aus mehreren Schichten aus jeweils organischem und anorganischem Material bestehen. Vielschichtige Komposite können auch verschiedene anorganische Materialien, wie verschiedene Gläser, beinhalten.

Die erfindungsgemäßen optischen Elemente können ferner eingesetzt werden für die asphärische Überformung von sphärischen Linsen, was deren optische Eigenschaften verbessert. Auch möglich mittels des erfindungsgemäßen Verfahrens ist das Erzeugen diffraktiven Struktur auf einem flachen Substrat oder auf einer Linse. Ebenso möglich ist das Anbringen von Halterungen, Justierhilfen o. Ä. an einer Linse oder das Aufbringen von refraktiven oder diffraktiven optischen Elementen auf Halbleitern, wie beispielsweise LEDs, CMOSs, CCD's, VCSEL (vertical cavity surface emitting laser) usw.

Durch geeignetes Design des diffraktiven optischen Elements (DOE) kann die Wirkung eines optischen "Low Pass Filters" (Tiefpassfilter) auf einem Element einer digitalen Bilderfassungseinheit (CCD, CMOS) erzielt werden.

Auch können optische Strukturen zur Beeinflussung der Reflektion, wie beispielsweise zur Entspiegelung, auf den Komposit aufgebracht werden. Das gilt auch für optische Substrate, wie Filtergläser, Polarisatoren usw.

Anhand der folgenden Ausführungsbeispiele soll die vorliegende Erfindung näher beschrieben werden, ohne diese dadurch einzuschränken:

**Beispiel 1**

Eine Glaslinse wird in Formwerkzeug mit Trennebene eingelegt. Zur Aufnahme der Linse befindet sich im Werkzeug eine Passung aus einem Silikonelastomer. Geeignete Materialien für die Passung sind Gummi und Kautschuke, Silikone, Fluorpolymere oder entsprechende Materialien mit einer geringeren Härte als Glas. Das Werkzeug ist Bestandteil einer Hochdruckgießanlage für Polyurethan.

Das Anlagenkonzept entspricht dem von Krauss-Maffei-Kunststofftechnik, München, entwickeltem System für das so genannte Clear Coat Moulding. Vorteilhaft bei den für optische Hybride typischen kleinen Materialmengen ist die Zirkulation der Komponenten in einem entsprechenden Rohrleitungssystem. Zur Verarbeitung der Komponenten ist das ganze Lager- und Transportsystem auf 50 bis 80 ˚C erwärmt. Die Puffertanks und Speisertanks sind zum Erhalt der Reinheit der Komponenten und zur Vermeidung von Lufteinschlüssen evakuiert.

Die PU-Komponenten wurden von dem Unternehmen Elastogran, Lemförde, mit dem Produktnamen Elastoclear bezogen.

Der Mischkopf ist direkt an dem Formwerkzeug angebracht. Somit wird eine Kontamination durch eine Mischkopföffnung verhindert. Mithilfe eines Druckaufnehmers im Formwerkzeug wurde nach Erreichen des Werkzeuginnendrucks von 15 bar (15.000 hPa) die Dosierung beendet. Der Innendruck hat sich als besonders vorteilhaft erwiesen, da im Vergleich zu geringeren Drücken so das Auftreten von Blasen verringert und die Qualität der Oberfläche verbessert werden konnte.

Die Polymerisation der Komponenten erfolgte bei einer Werkzeugtemperatur von 80 ˚C innerhalb von 3 Minuten. Im Anschluss wurde das Werkzeug geöffnet und der Hybrid entnommen.

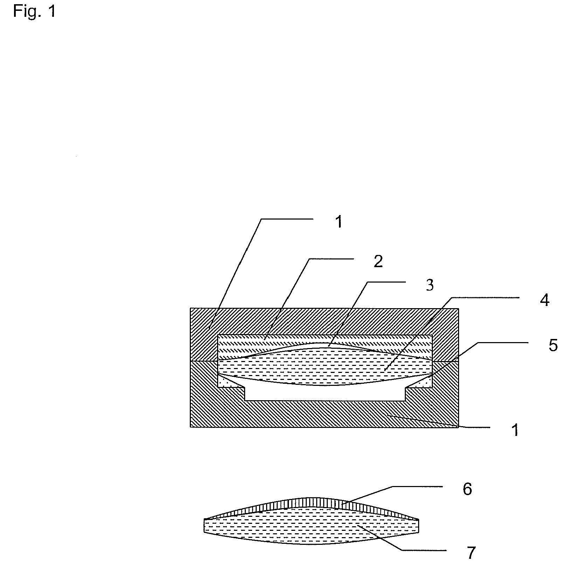

**Fig. 1** zeigt einen linsenförmigen Komposit gemäß der vorliegenden Erfindung, sowohl innerhalb der Werkzeugform als auch außerhalb.

**Beispiel 2**

Eine Glasplatte wird in ein Formwerkzeug mit Trennebene eingelegt. Beide Werkzeughälften enthalten eine mit Silikonelastomer ausgeführte strukturierte Fläche. Die Oberflächenstruktur einer Hälfte bildet ein diffraktives optisches Element (DOE) und die Struktur der zweiten Hälfte eine Fresnellinse ab.

Zwischen der Glasplatte und den strukturierten Oberflächen des Werkzeuges verbleibt zu beiden Seiten eine Kavität. Diese wird wie in Beispiel 1 beschrieben mit PU (Polyurethan) gefüllt.

Nach dem Öffnen des Werkzeuges kann der Hybrid entnommen werden. Dieser enthält im Kern eine Glasplatte und an den Oberflächen Polyurethan. Der Hybrid weist auf einer Oberfläche ein DOE und auf der anderen Oberfläche eine Fresnellinse auf.

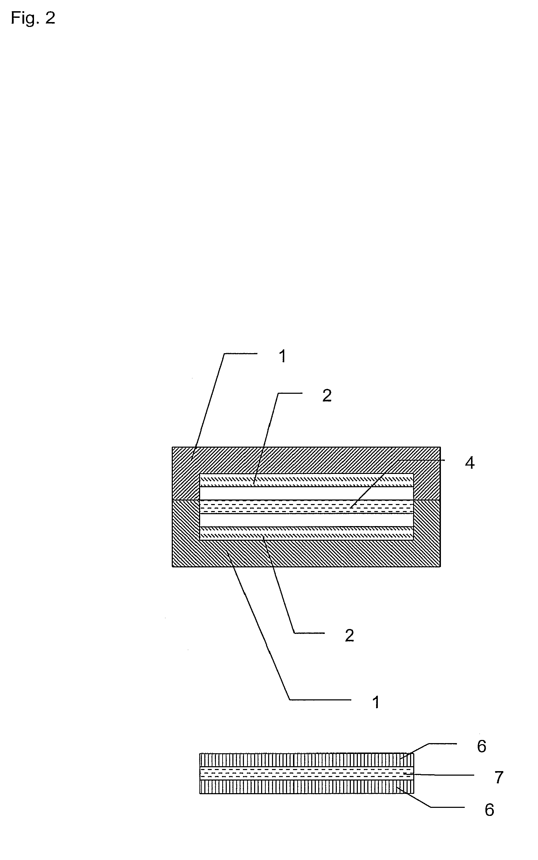

**Fig. 2** zeigt einen plattenförmigen Komposit gemäß der vorliegenden Erfindung, sowohl innerhalb der Werkzeugform als auch außerhalb.

Wahlweise könnte ein solcher Komposit auch so gefertigt sein, dass zwei Glasschichten eine Polymerschicht oder mehrere Polymerschichten umgeben.

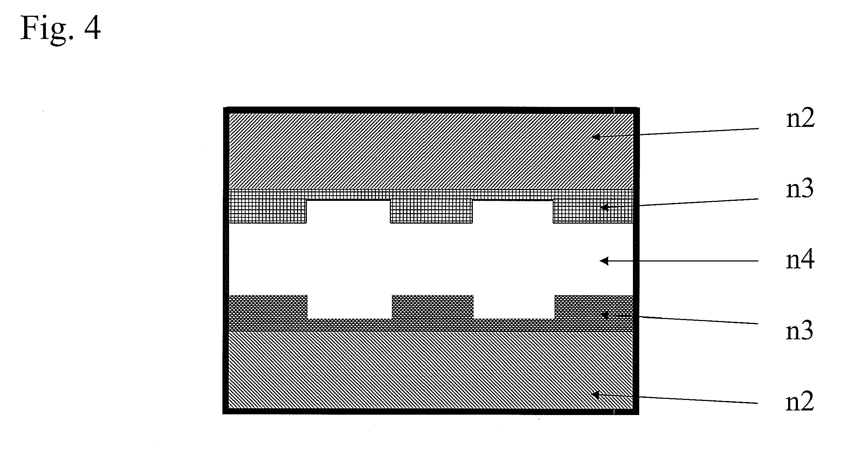

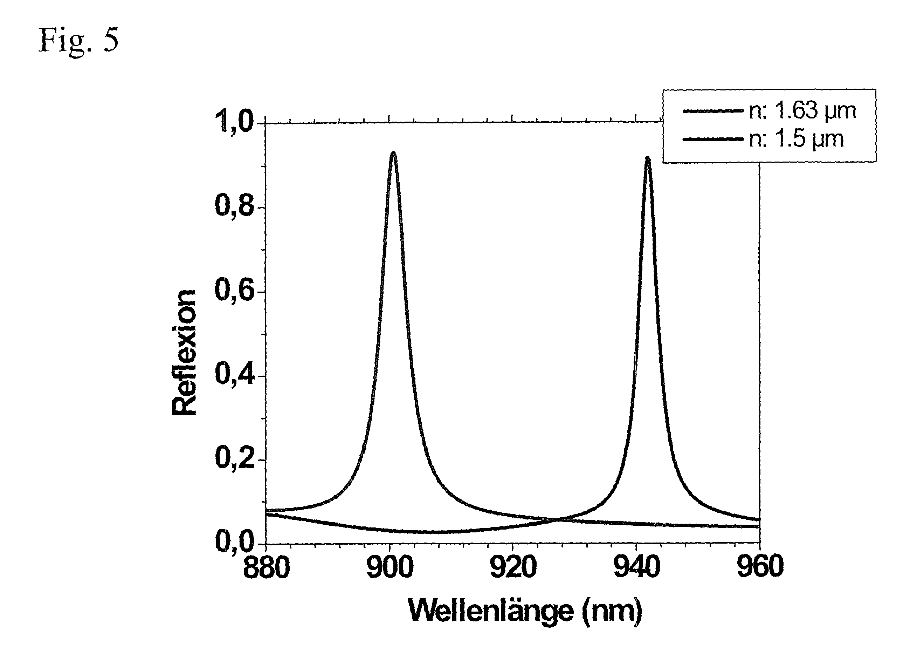

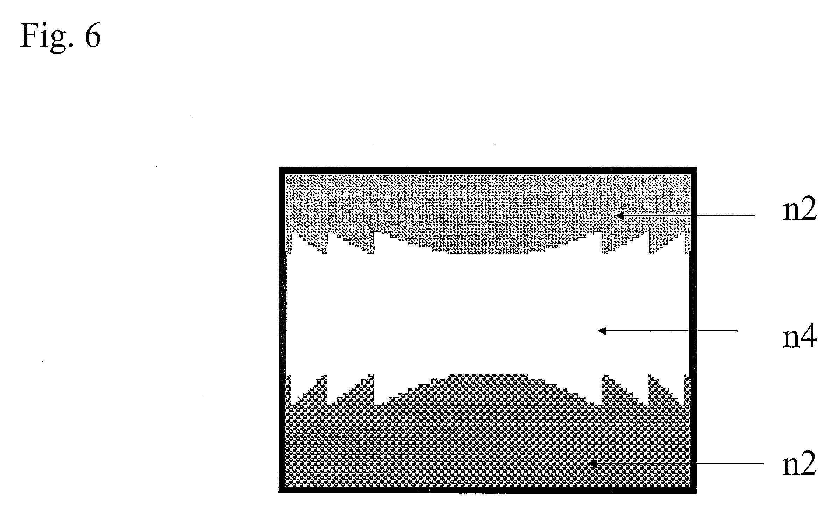

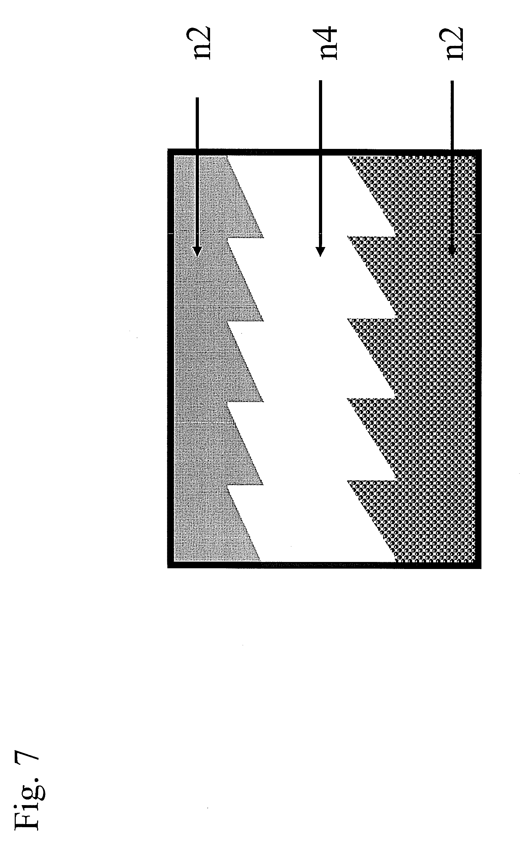

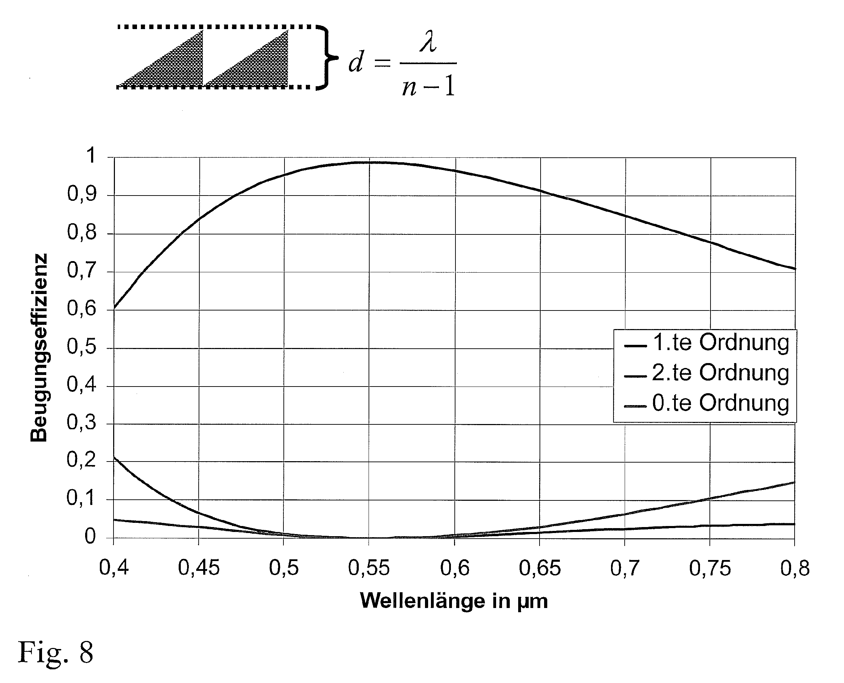

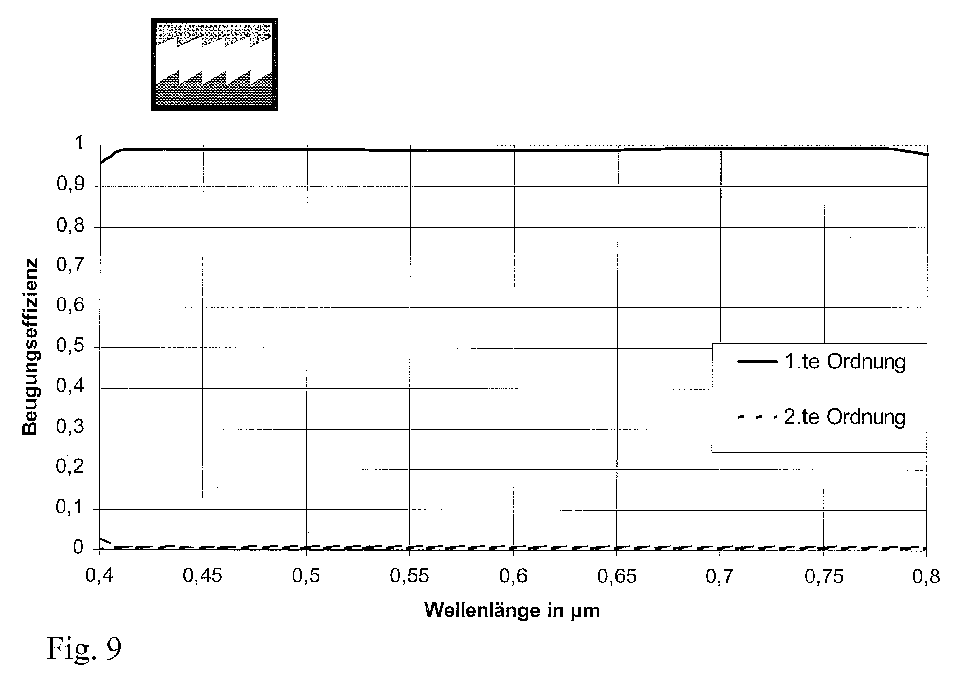

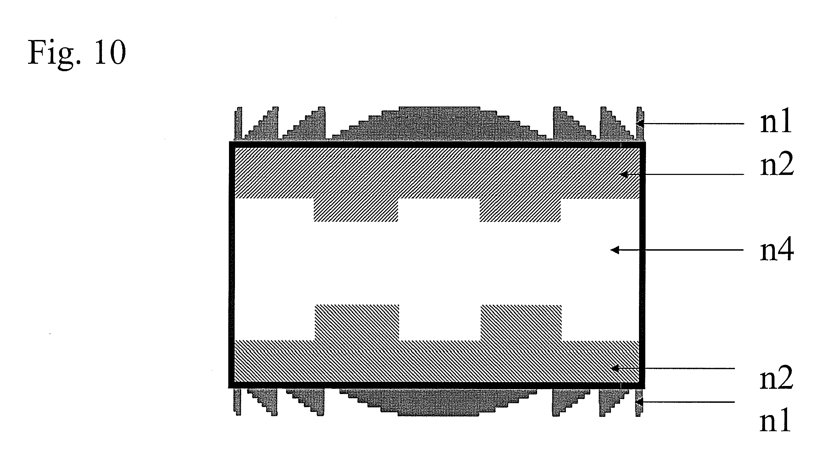

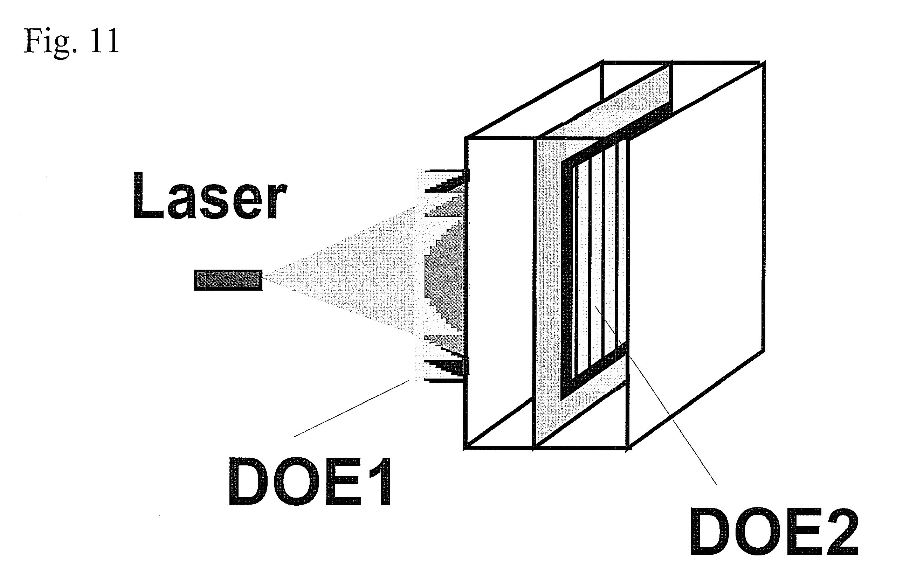

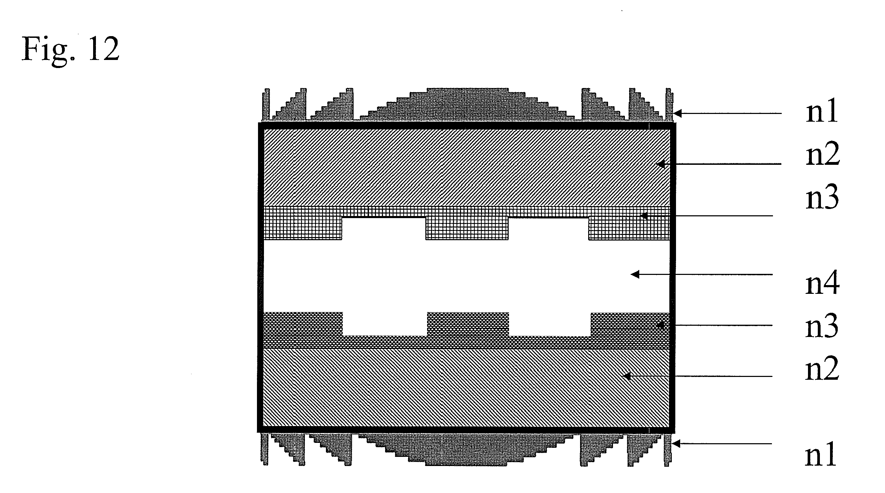

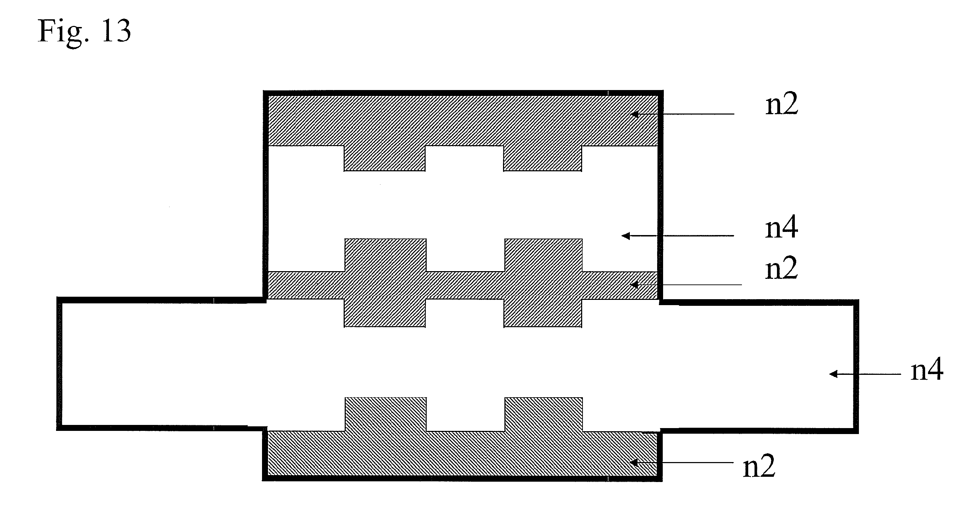

Beispiele sind in den Figuren 3 bis 13 zu sehen.

**Fig. 3a** zeigt ein heiß geprägtes Bauteil, zunächst in der Sollkontur;

**Fig. 3b** zeigt ein heiß geprägtes Bauteil in ungewünscht veränderter Kontur nach dem Heißprägeprozess;

**Fig. 3c** zeigt den erfindungsgemäßen Aufbau durch das Aufbringen des Polymers;

**Fig. 3d** eine Ausführungsform der Erfindung;

**Fig. 4** zeigt ein strahlformendes Element mit zwei diffraktiven optischen Elementen, aufgebaut als Gitter mit einem Schichtwellenleiter. Beide Substrate sind mit einem Polymer (Polyurethan) verbunden;

**Fig. 5** ein berechnetes Reflektionsspektrum für eine Schichtwellenleitergitter-Struktur für zwei unterschiedliche Brechungsindizes (n: 1.63 und n: 1,5);

**Fig. 6** zeigt ein strahlformendes Element mit zwei gestuften diffraktiven optischen Elementen (n2 und n4), verbunden mit einem Polymer (PU) und strukturiert in ein anorganisches Substrat (Glas). Die diffraktiven optischen Elemente erfüllen die Funktion einer asphärischen Linse;

**Fig. 7** zeigt ein strahlformendes Element mit zwei geblazten diffraktiven optischen Elementen (n2 und n4), verbunden mit einem Polymer (Polyurethan) und strukturiert in ein anorganisches Substrat (Glas);

**Fig. 8** zeigt eine berechnete Beugungseffizienz eines normalen geblazten Gitters für die 0., 1. und 2. Ordnung in Abhängigkeit von der Wellenlänge. Die Strukturhöhe d beträgt $d=\tilde{\lambda}/n-1$, wobei n der Brechungsindex des Gittermaterials ist;

**Fig. 9** zeigt eine berechnete Beugungseffizienz einer Kombination von zwei geblazeten Gittern aus unterschiedlichen Materialien, wie in Fig. 4 oder Fig. 6 dargestellt. Die Beugungseffizienz ist für die 0., 1. und 2. Ordnung in Abhängigkeit von der Wellenlänge dargestellt;

**Fig. 10** zeigt ein strahlformendes Element mit zwei gestuften diffraktiven optischen Elementen (n1), jeweils auf einem Substrat mit diffraktiven optischen Elementen (n2), welche mit einem Polymer (n4 z. B. PU) verbunden sind;

**Fig. 11** zeigt ein strahlformendes Element, bestehend aus zwei diffraktiven optischen Elementen (DOE1 und DOE2), welche dazu dienen, divergentes Laserlicht zu kollimieren (DOE1) und frequenzselektiv zu reflektieren oder einzuengen (DOE2);

**Fig. 12** zeigt ein strahlformendes Element mit zwei gestuften diffraktiven optischen Elementen (n1) auf jeweils einem Substrat (n2), deren Rückseite mit diffraktiven optischen Elementen in Form von Wellenleitergittern (n3) belegt ist, welche mit einem Polymer (n4) verbunden.sind;

**Fig. 13** zeigt ein strahlformendes Element mit unterschiedlichen diffraktiven optischen Elementen auf anorganischem Substrat n2, welche mit einem Polymer verbunden sind (n4 ist die Polymerschicht). n4 könnte eine Funktion als "Befestigungselement oder Gehäuseteil o. Ä. für das strahlformende Element ausüben.

**Bezugszeichenliste**

1     Werkzeugformhälfte
2     Strukturierte Fläche
3     Kavität
4     Glaslinse
5     Passung
6     Polymer
7     Glas

(a)     Sollkontur der Linse
(b)     Kontur der Linse nach Heißprägeprozess
(c)     Erfindungsgemäßer Aufbau mit Kompensation der Formabweichung durch Polymer
(d)     Erfindungsgemäßer Aufbau mit Kompensation der Formabweichung und zusätzlicher optischer Funktion durch eine strukturierte Oberfläche

n1     Glas oder Sicht z. B. $SiO_2$
n2     Glas
n3     Schicht z. B. $TiO_2$

n4     Polymer, z. B. PU

**Patentansprüche**

1. Strahlformendes Element, welches als Komposit vorliegt, umfassend mindestens ein anorganisches Substrat, ausgewählt aus der Gruppe bestehend aus Glas, Halbleitermaterialien, Metallen, Keramiken oder Kristalle, und mindestens eine Komponente mit organischem Anteil, in der Form eines Polymers, wobei das Polymer wird aus zwei oder mehreren Ausgangskomponenten durch thermische Initiierung bei Temperaturen zwischen 0 und 180 °C gebildet wird.

2. Strahlformendes Element nach Anspruch 1, ausgewählt aus der Gruppe bestehend aus Linsen, diffraktiven Elementen, Spiegeln oder optischen Systemen.

3. Strahlformendes Element nach Anspruch 2, wobei das diffraktive Element ausgewählt ist aus linearen Gittern, gechirpten Gittern, Sägezahngittern, Fresnelzonenlinsen, CGHs (computer generated holograms).

4. Strahlformendes Element nach einem oder mehreren der vorhergehenden Ansprüche, wobei das anorganische Substrat ausgewählt ist aus der Gruppe bestehend aus Kieselgläsern, dotierten Quarzgläsern, Natronkalksilicatgläsern, alkalifreien oder alkalioxidhaltigen Erdalkalialuminosilicatgläsern, Borosilicatgläsern, Phosphatgläsern, Fluorphosphatgläsern, Borophosphatgläsern, Borophosphosilicatgläsern, Lotgläsern und Gläser mit niedrigem Tg, bleihaltigen oder bleifreien optischen Gläsern, wahlweise ionen- oder kolloidgefärbten Farb- und Filtergläsern oder Glaskeramiken.

5. Strahlformendes Element nach einem oder mehreren der vorhergehenden Ansprüche, wobei das anorganische Substrat eine Asphäre ist.

6. Strahlformendes Element nach Anspruch 5, wobei die Asphäre eine dreifach ellipsoid (DE) Linse ist.

7. Strahlformendes Element nach einem oder mehreren der vorhergehenden Ansprüche, wobei das strahlformende Element ein Halbleiter ist.

8. Strahlformendes Element nach Anspruch 7, wobei das Halbleiterbauelement ein CCD- oder CMOS-Sensor, oder LED oder VCSEL ist.

9. Strahlformendes Element nach einem oder mehreren der vorhergehenden Ansprüche, wobei das strahlformende Element ein Tiefpassfilter ist.

**10.** Strahlformendes Element nach einem oder mehreren der vorhergehenden Ansprüche, wobei das Polymer ausgewählt ist aus Polyurethanen oder Silikonen.

**11.** Strahlformendes Element nach einem oder mehreren der vorhergehenden Ansprüche, wobei das Polymer ausgewählt ist aus der Gruppe bestehend aus Polyurethanen mit aliphatischer Isocyanat (HDI) Komponente oder additionsvernetzten Silikonen.

**12.** Strahlformendes Element nach einem oder mehreren der vorhergehenden Ansprüche, wobei die Ausgangskomponenten des Polymers vor der chemischen Reaktion bei vermindertem Druck entgast werden.

**13.** Strahlformendes Element nach einem oder mehreren der vorhergehenden Ansprüche, wobei polymerische Polyurethankomponenten in einer Hochdruckmischanlage verarbeitet werden, wobei wahlweise Ringleitungssystem mit Zirkulation eingesetzt werden.

**14.** Strahlformendes Element nach einem oder mehreren der vorhergehenden Ansprüche, wobei die Polyurethankomponenten zu ihrer Verarbeitung auf Temperaturen von 20 bis 100 ˚C, bevorzugt 30 bis 80 ˚C erwärmt werden.

**15.** Strahlformendes Element nach einem oder mehreren der vorhergehenden Ansprüche, wobei der Füllvorgang der Form zeitgesteuert, volumengesteuert, über den Komponentendruck gesteuert, über den Forminnendruck im Angussbereich oder über den Forminnendruck im Überlaufbereich gesteuert ist.

**16.** Strahlformendes Element nach einem oder mehreren der vorhergehenden Ansprüche, wobei die strahlformende Eigenschaft durch eine Strukturierung der Oberfläche während des Herstellungsprozesses der organischen Komponente erreicht wird.

**17.** Strahlformendes Element nach einem oder mehreren der vorhergehenden Ansprüche, wobei die durch die Strukturierung erreichte Struktur als Negativ in der Form vorliegt.

**18.** Strahlformendes Element nach einem oder mehreren der vorhergehenden Ansprüche, wobei das Struktur tragende Element der Form aus einem Material mit geringer Oberflächenenergie besteht.

**19.** Strahlformendes Element nach Anspruch 18, wobei das Material mit geringer Oberflächenenergie ausgewählt ist aus Silikon oder halogenhaltigen Polymeren.

**20.** Strahlformendes Element nach Anspruch 19, wobei das halogenhaltige Polymer ausgewählt ist aus PTFE oder PVDF.

**21.** Strahlformendes Element nach einem der vorhergehenden Ansprüche, welches mindestens drei Materialien in der Form von drei Schichten umfasst.

**22.** Strahlformendes Element nach Anspruch 15, wobei die Brechungsindizes und/oder Abbezahlen von mindestens drei Materialien unterschiedlich sind.

**23.** Stahlformendes Element nach einem der vorhergehenden Ansprüche, wobei die unterschiedlichen Materialien in der Form unterschiedlicher Schichten M1, M2, M3 vorliegen.

**24.** Stahlformendes Element nach einem der vorhergehenden Ansprüche, wobei die Schichten M1, M2 und M3 aufeinanderfolgen.

**25.** Stahlformendes Element nach einem der vorhergehenden Ansprüche, wobei die entsprechenden Abbezahlen $\nu 1$, $\nu 2$, $\nu 3$, der Schichten M1, M2 und M3 wie folgt definiert sind:

$$\nu 1 < \nu 2 > \nu 3$$

oder

$$\nu 1 > \nu 2 < \nu 3$$

oder

$$\nu 1 > \nu 2 > \nu 3.$$

**26.** Strahlformendes Element nach Anspruch 17, wobei die Brechungsindizes folgende Gleichung erfüllen

$$\pm (n_1-1)d_1 \pm (n_3-1)d_2 \pm (n_2-1)d_2 = m\lambda 0,$$

wobei
$n_1$ = Brechungsindex von Material 1 (M1)
$n_2$ = Brechungsindex von Material 2 (M2)
$n_3$ = Brechungsindex von Material 3 (M3)
$d_1$ = Strukturhöhe von Material 1 (M1)
$d_2$ = Strukturhöhe von Material 2 (M2)
$d_3$ = Strukturhöhe von Material 3 (M3)

**27.** Stahlformendes Element nach einem der vorhergehenden Ansprüche, wobei mindestens ein Material einen Brechungsindex $n_D$ von gößer als 1,75 aufweist.

**28.** Stahlformendes Element nach einem der vorhergehenden Ansprüche, wobei die nach außen angeordneten Materialoberflächen eine optische wirksame Struktur aufweisen.

**29.** Stahlformendes Element nach einem der vorhergehenden Ansprüche, wobei mindestens eines der Materialien neben seiner optischen Funktion auch noch eine mechanische Funktion aufweist und dementsprechend ausgeformt ist.

**30.** Stahlformendes Element nach Anspruch 23, wobei die mechanische Funktion zum Fixieren, Montieren, Haltern, Justieren oder Einbauen geeignet ist.

**31.** Verfahren zur Herstellung eines strahlformenden Elementes, umfassend die Schritte

- Einbringen eines anorganischen Substrates in eine Form
- Fixieren des anorganischen Substrates
- Einbringen der Ausgangskomponenten des Polymers auf das anorganische Substrat durch Eingießen in die Form und
- thermisch initiierte chemische Reaktion der Komponenten bei einer Temperatur im Bereich von 0 bis 180 ˚C.

**32.** Verfahren nach Anspruch 31, wobei der Fülldruck der Form 0 bis 100.000 hPa, bevorzugt 0 bis 50.000 hPa beträgt.

**33.** Verfahren nach einem der Ansprüche 31 und/oder 32, wobei durch geeignete Wahl der Kontaktmaterialien auf Trennmittel verzichtet werden kann.

**Geänderte Patentansprüche gemäss Regel 86(2) EPÜ.**

**1.** Strahlformendes Element, welches als Komposit vorliegt, umfassend mindestens ein anorganisches Substrat, ausgewählt aus der Gruppe bestehend aus Glas, Halbleitermaterialien, Metallen, Keramiken oder Kristalle, und mindestens eine Komponente mit organischem Anteil, in der Form eines Polymers, wobei das Polymer aus zwei oder mehreren Ausgangskomponenten durch thermische Initiierung bei Temperaturen zwischen 0 und 180 ˚C gebildet wird und wobei die jeweiligen Schichten aus organischem, Substrat und anorganischer Komponente während der Ausbildung des organischen Substrates direkt miteinander verbunden werden.

**2.** Strahlformendes Element nach Anspruch 1, ausgewählt aus der Gruppe bestehend aus Linsen, diffraktiven Elementen, Spiegeln oder optischen Systemen.

**3.** Strahtformendes Element nach Anspruch 2, wobei das diffraktive Element ausgewählt ist aus linearen Gittem, gechirpten Gittem, Sägezahngittem, Fresnelzonenlinsen, CGHs (computer generated holograms).

**4.** Strahlformendes Element nach einem oder mehreren der vorhergehenden Ansprüche, wobei das anorganische Substrat ausgewählt ist aus der Gruppe bestehend aus Kieselgläsem, dotierten Quarzgläsern, Natronkalksilicatgläsern, alkalifreien oder alkalioxidhaltigen Erdalkalialuminvsilicatgläsern, Borosilicatgtäsern, Phosphatgläsem, Fluorphosphatgläsern, Borophosphatgläsern, Borophosphosilicatgläsem, Lotgläsem und Gläser mit niedrigem Tg, bleihaltigen oder bleifreien optischen Gläsern, wahlweise ionen- oder kolloidgefärbten Farb- und Filtergläsem oder Glaskeramiken,

**5.** Strahtformendes Element nach einem oder mehreren der vorhergehenden Ansprüche, wobei das anorganische Substrat eine Asphäre ist.

**6.** Strahlformendes Element nach Anspruch 5, wobei die Asphäre eine dreifach ellipsoid (DE) Linse ist.

**7.** Strahlformendes Element nach einem oder mehreren der vorhergehenden Ansprüche, wobei das stahlformende Element ein Halbleiter ist.

**8.** Strahlformendes Element nach Anspruch 7, wobei das Halbleiterbauelement ein CCD-oder CMOS-Sensor, oder LED oder VCSEL ist.

**9.** Strahlformendes Element nach einem oder mehreren der vorhergehenden Ansprüche, wobei das strahlformende Element ein Tiefpassfilter ist.

**10.** Strahlformendes Element nach einem oder mehreren der vorhergehenden Ansprüche, wobei das Polymer ausgewählt ist aus Polyurethanen oder Silikonen,

**11.** Strahlformendes Element nach einem oder mehreren der vorhergehenden Ansprüche, wobei das Polymer ausgewählt ist aus der Gruppe bestehend aus Polyurethanen mit aliphatischer Isocyanat (HDI) Komponente oder additionsvernetzten Silikonen.

**12.** Strahlformendes Element nach einem der vorhergehenden Ansprüche, welches mindestens drei Materialien in der Form von drei Schichten umfasst.

**13.** Strahlformendes Element nach Anspruch 12, wobei die Brechungsindizes und/oder Abbezahlen von mindestens drei Materialien, welche ein anorganisches Substrat und Komponenten mit organischem Anteil umfassen, unterschiedlich sind.

**14.** Stahlformendes Element nach einem der vorhergehenden Ansprüche, wobei die unterschiedlichen Materialien, welche ein anorganisches Substrat und Komponenten mit organischem Anteil umfassen, in der Form unterschiedlicher Schichten M1, M2, M3 vorliegen.

**15.** Stahlformendes Element nach einem der vorhergehenden Ansprüche, wobei die Schichten M1, M2 und M3 aufeinander folgen.

**16.** Stahlformendes Element nach einem der vorhergehenden Ansprüche, wobei die entsprechenden Abbezahlen v1, v2, v3, der Schichten M1, M2 und M3 wie folgt definiert sind:

$$v1 < v2 > v3$$

oder

$$v1 > v2 < v3$$

oder

$$v1 > v2 > v3.$$

**17.** Strahlformendes Element nach Anspruch 13, wobei die Brechungsindizes folgende Gleichung erfüllen

$$\pm (n_1-1)d_1 \pm (n_3-1)d_2 \pm (n_2-1)d_2 = m\lambda 0,$$

wobei
$n_1$ = Brechungsindex von Material 1 (M1)
$n_2$ = Brechungsindex von Material 2 (M2)
$n_3$ = Brechungsindex von Material 3 (M3)
$d_1$ = Strukturhöhe von Material 1 (M1)
$d_2$ = Strukturhöhe von Material 2 (M2)
$d_3$ = Strukturhöhe von Material 3 (M3)

**18.** Stahlformendes Element nach einem der vorhergehenden Ansprüche, wobei mindestens ein Material, welche ein anorganisches Substrat und eine Komponente mit organischem Anteil umfasst, einen Brechungsindex $n_D$ von größer als 1,75 aufweist.

**19.** Stahlformendes Element nach einem der vorhergehenden Ansprüche, wobei die nach außen angeordneten Materialoberflächen des jeweiligen anorganischen Substrates und/oder der Komponente mit organischem Anteil eine optische wirksame Struktur aufweisen.

**20.** Stahlformendes Element nach einem der vorhergehenden Ansprüche, wobei mindestens eines der Materialien, umfassend ein anorganisches Substrat und eine Komponente mit organischem Anteil neben seiner optischen Funktion auch noch eine mechanische Funktion aufweist und dementsprechend ausgeformt ist.

**21.** Stahlfoimendes Element nach Anspruch 23, wobei die mechanische Funktion zum Fixieren, Montieren, Haltern, Justieren oder Einbauen geeignet ist.

**22.** Verfahren zur Herstellung eines strahlformenden Elementes, umfassend die Schritte

- Einbringen eines anorganischen Substrates in eine Form
- Fixieren des anorganischen Substrates
- Einbringen der Ausgangskomponenten des Polymers auf das anorganische Substrat durch Eingießen in die Form und
- thermisch initiierte chemische Reaktion der Ausgangskomponenten des Polymers bei einer Temperatur im Bereich von 0 bis 180°C.

**23.** Verfahren nach Anspruch 22, wobei der Fülldruck der Form 0 bis 100.000 hPa, bevorzugt 0 bis 50.000 hPa beträgt.

**24.** Verfahren nach einem der Ansprüche 22 und/ oder 23, wobei durch geeignete Wahl der Materialien der Form auf Formtrennmittel verzichtet werden kann.

**25.** Verfahren nach einem oder mehreren der Ansprüche 22 bis 24, wobei die Ausgangskomponenten des Polymers vor der chemischen Reaktion bei vermindertem Druck entgast werden.

**26.** Verfahren nach einem oder mehreren der Ansprüche 22 bis 25, wobei als Polymer polymerische Polyurethankomponenten in einer Hochdruckmischanlage verarbeitet werden und wobei wahlweise Ringleitungssysteme mit Zirkulation eingesetzt werden.

**27.** Verfahren nach Anspruch 26, wobei die Polyurethankomponenten zur Verarbeitung auf Temperaturen von 20 bis 100 °C erwärmt werden.

**28.** Verfahren nach Anspruch 27, wobei die Polyurethankomponenten zur Verarbeitung auf Temperaturen von 30 bis 80 ˚C erwärmt werden.

**29.** Verfahren nach einem oder mehreren der Ansprüche 22 bis 28, wobei der Füllvorgang der Form zeitgesteuert, volumengesteuert, über den Kömponentendruck gesteuert, über den Forminnendruck im Angussbereich oder über den Forminnendruck im Überlaufbereich gesteuert ist.

**30.** Verfahren nach einem oder mehreren der Ansprüche 22 bis 29, wobei eine strahlformende Eigenschaft während des Herstellungsprozesses durch eine Strukturierung der Oberfläche der Komponente mit organischem Anteil erreicht wird.

**31.** Verfahren nach Anspruch 30. wobei die durch die Strukturierung erreichte Struktur als Negativ in der Form vorliegt.

**32.** Verfahren nach einem oder mehreren der Ansprüche 22 bis 31, wobei das Struktur tragende Element der Form aus einem Material mit geringer Oberflächenenergie besteht.

**33.** Verfahren nach einem oder mehreren der Ansprüche 22 bis 32, wobei das Material der Form mit geringer Oberflächenenergie ausgewählt ist aus Silikon oder halogenhaltigen Polymeren.

**34.** Verfahren nach Anspruch 33, wobei das halogenhaltige Polymer ausgewählt ist aus PTFE oder PVDF

Fig. 1

Fig. 2

Fig. 3a

Fig. 3b

Fig. 3c

Fig. 3d

# Fig. 4

n2

n3

n4

n3

n2

Fig. 5

EP 1 647 841 A1

Fig. 6

n2

n4

n2

Fig. 7

$$d = \frac{\lambda}{n-1}$$

Fig. 8

EP 1 647 841 A1

EP 1 647 841 A1

Fig. 9

Fig. 10

n1

n2

n4

n2

n1

Fig. 11

Laser

DOE1

DOE2

EP 1 647 841 A1

Fig. 12

n1
n2
n3
n4
n3
n2
n1

Fig. 13

n2

n4

n2

n4

n2

EP 1 647 841 A1

# EP 1 647 841 A1

| Europäisches Patentamt | **EUROPÄISCHER TEILRECHERCHENBERICHT** der nach Regel 45 des Europäischen Patent- übereinkommens für das weitere Verfahren als europäischer Recherchenbericht gilt | Nummer der Anmeldung EP 04 10 5252 |
|---|---|---|

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int.Cl.7) |
|---|---|---|---|
| D,X | US 5 323 191 A (FIRTION ET AL) 21. Juni 1994 (1994-06-21) * Beispiele 1,3 * | 1-11 | G02B1/00 C03C17/28 C03C17/34 |
| X | US 6 399 190 B1 (MYERS JAMES R ET AL) 4. Juni 2002 (2002-06-04) * Spalte 3, Zeile 22 - Spalte 4, Zeile 10; Abbildung 1 * | 1,2,10, 11 | |
| X | US 4 235 654 A (DOHI, TOSHIHIDE ET AL) 25. November 1980 (1980-11-25) * Abbildung w * | 1-4,9 | |
| X | 43RD INTERNATIONAL CONFERENCE ON ELECTRON, ION, AND PHOTON BEAM TECHNOLOGY AND NANOFABRICATION 1-4 JUNE 1999 MARCO ISLAND, FL, USA, Bd. 17, Nr. 6, 1999, Seiten 3212-3216, XP002325637 Journal of Vacuum Science & Technology B (Microelectronics and Nanometer Structures) AIP for American Vacuum Soc USA ISSN: 0734-211X * Absatz [III.A]; Abbildung 3 * | 1-3 | |

| | | | RECHERCHIERTE SACHGEBIETE (Int.Cl.7) |
|---|---|---|---|
| | | | G02B C03C |

## UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort München | Abschlußdatum der Recherche 25. April 2005 | Prüfer Rödig, C |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

Europäisches
Patentamt

**UNVOLLSTÄNDIGE RECHERCHE
ERGÄNZUNGSBLATT C**

Nummer der Anmeldung

EP 04 10 5252

Nicht recherchierte Ansprüche:
    28-30, 33

Grund für die Beschränkung der Recherche:

Die Patentansprüche 28-30 definieren ein strahlformendes Element in
solch vager und unklarer Weise, dass eine sinnvolle Recherche unmöglich
erscheint. Insbesondere werden durch den Wortlaut der Ansprüche keine
konkreten strukturellen Merkmale des strahlformenden Elementes definiert.


Weiterhin bezieht Anspruch 33 sich auf einen Verfahrensschritt,
charakterisiert durch eine erstrebenswerte Eigenheit, nämlich die
Vermeidung von Trennmitteln. Der Anspruch umfasst daher alle Verfahren,
die diese Eigenheit aufweisen, wohingegen die Patentanmeldung Stütze
durch die Beschreibung im Sinne von Art. 83 EPÜ nur für eine begrenzte
Zahl solcher Produkte etc. liefert. Im vorliegenden Fall fehlt dem
Patentanspruch die entsprechende Stütze bzw. der Patentanmeldung die
nötige Offenbarung in einem solchen Masse, dass eine sinnvolle Recherche
über den gesamten erstrebten  Schutzbereich unmöglich erscheint.
Desungeachtet fehlt dem Anspruch auch die in Art. 84 EPÜ geforderte
Klarheit, nachdem in ihm versucht wird, das Verfahren über das erstrebte
Ergebnis zu definieren. Auch dieser Mangel an Klarheit ist dergestalt,
dass er eine sinnvolle Recherche über den gesamten erstrebten
Schutzbereich unmöglich macht.

**Europäisches
Patentamt**

Nummer der Anmeldung

EP 04 10 5252

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-11

**Europäisches**
**Patentamt**

**MANGELNDE EINHEITLICHKEIT**
**DER ERFINDUNG**
**ERGÄNZUNGSBLATT B**

Nummer der Anmeldung

EP 04 10 5252

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-11

        Materialien für strahlformende Elemente
        ---

2. Ansprüche: 12-20, 31-32

        Verfahren zur Polymerverarbeitung
        ---

3. Ansprüche: 21-27

        strahlformendes Element mit einer speziellen
        Brechungsindex-Schichtstruktur
        ---

**ANHANG ZUM EUROPÄISCHEN RECHERCHENBERICHT
ÜBER DIE EUROPÄISCHE PATENTANMELDUNG NR.**

EP 04 10 5252

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-04-2005

| Im Recherchenbericht angeführtes Patentdokument | Datum der Veröffentlichung | Mitglied(er) der Patentfamilie | Datum der Veröffentlichung |
|---|---|---|---|
| US 5323191 A | 21-06-1994 | FR 2679044 A1 | 15-01-1993 |
| | | CA 2073477 A1 | 13-01-1993 |
| | | DE 69210316 D1 | 05-06-1996 |
| | | DE 69210316 T2 | 28-11-1996 |
| | | EP 0522405 A1 | 13-01-1993 |
| | | ES 2087351 T3 | 16-07-1996 |
| | | JP 5237179 A | 17-09-1993 |
| | | MX 9204082 A1 | 01-01-1993 |
| US 6399190 B1 | 04-06-2002 | AT 259506 T | 15-02-2004 |
| | | AU 703149 B2 | 18-03-1999 |
| | | AU 3895997 A | 20-02-1998 |
| | | CA 2228279 A1 | 05-02-1998 |
| | | DE 69727546 D1 | 18-03-2004 |
| | | DE 69727546 T2 | 23-12-2004 |
| | | EP 0857308 A1 | 12-08-1998 |
| | | JP 11500545 T | 12-01-1999 |
| | | JP 3155014 B2 | 09-04-2001 |
| | | NO 980951 A | 05-03-1998 |
| | | TR 9800541 T1 | 21-04-1999 |
| | | TR 9800544 T1 | 22-06-1998 |
| | | WO 9804935 A1 | 05-02-1998 |
| US 4235654 A | 25-11-1980 | JP 54006006 A | 17-01-1979 |
| | | DE 2818547 A1 | 04-01-1979 |

EPO FORM P0461

Für nähere Einzelheiten zu diesem Anhang : siehe Amtsblatt des Europäischen Patentamts, Nr.12/82